# EUROPEAN PATENT SPECIFICATION

(11) **EP 1 550 733 B1**
(45) Date of publication and mention of the grant of the patent: **28.08.2013**
(21) Application number: 03748719.6
(22) Date of filing: 06.10.2003
(51) Int. Cl.: C22C 30/00, H01H 37/76, H01H 85/06

(54) **ELEMENT FOR THERMAL FUSE, THERMAL FUSE AND BATTERY INCLUDING THE SAME**
ELEMENT FÜR THERMISCHE SICHERUNG, THERMISCHE SICHERUNG UND DIESE ENTHALTENDE BATTERIE
ELEMENT DE FUSIBLE THERMIQUE, FUSIBLE THERMIQUE ET BATTERIE COMPRENANT CELUI-CI

(30) Priority: 07.10.2002 JP 2002293865
(43) Date of publication of application: 06.07.2005
(73) Proprietor: Panasonic Corporation, Kadoma-shi Osaka 571-8501 (JP)
(72) Inventor: SENDA, Kenji, Fukui 910-0854 (JP); MUKAI, Takahiro, Miyazaki 880-0056 (JP); IZAKI, Masatoshi, Miyazaki 880-0124 (JP)
(74) Representative: Grünecker, Kinkeldey, Stockmair & Schwanhäusser
(86) International application number: PCT/JP2003/012769
(87) International publication number: WO 2004/031426

(56) References cited:
- EP-A- 1 424 711
- EP-A- 1 424 712
- JP-A- 2001 143 592
- JP-A- 2001 291 459
- JP-A- 2002 279 878
- JP-A- 2003 034 831
- JP-A- 2003 082 430
- PATENT ABSTRACTS OF JAPAN vol. 2003, no. 06, 3 June 2003 (2003-06-03) -& JP 2003 034831 A (NEC SCHOTT COMPONENTS CORP), 7 February 2003 (2003-02-07)
- PATENT ABSTRACTS OF JAPAN vol. 2000, no. 22, 9 March 2001 (2001-03-09) -& JP 2001 143592 A (UCHIHASHI ESTEC CO LTD), 25 May 2001 (2001-05-25)
- PATENT ABSTRACTS OF JAPAN vol. 2000, no. 22, 9 March 2001 (2001-03-09) -& JP 2001 135216 A (UCHIHASHI ESTEC CO LTD), 18 May 2001 (2001-05-18)
- PATENT ABSTRACTS OF JAPAN vol. 2000, no. 26, 1 July 2002 (2002-07-01) -& JP 2001 266724 A (UCHIHASHI ESTEC CO LTD), 28 September 2001 (2001-09-28)
- OHNUMA I. ET AL.: 'Phase equilibria of Sn-In based micro-soldering alloys' JOURNAL OF ELECTRONIC MATERIALS vol. 29, no. 10, 2000, pages 1113 - 1121, XP002976380

## Description

### TECHNICAL FIELD

The present invention relates to an element for a thermal fuse, a thermal fuse including the element, and a battery including the thermal fuse.

### BACKGROUND ART

Electronic apparatuses excluding cadmium and lead are recently demanded since it is an issue that cadmium and lead are released from the electronic apparatuses and contaminate the natural environment. It is accordingly desired that thermal fuses used for protection of the electronic apparatuses are free from cadmium and lead.

Particularly in packaged batteries used in devices, such as mobile telephones, thermal fuses that do not contain lead and cadmium are demanded since the thermal fuses are connected to batteries by spot welding, and lead-free solder is already used for protection circuits for regulating charges and discharges of the batteries.

These packaged batteries have small thermal capacities according to reducing if their sizes, and have their temperatures rising rapidly when being heated. It is therefore necessary that these thermal fuses have low fusible temperatures ranging from 85°C to 95°C in order to stop electric currents quickly in case of abnormal conditions.

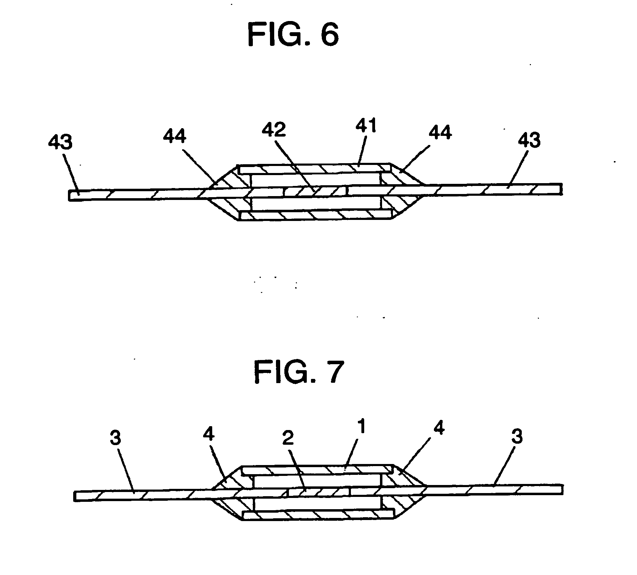

Fig. 7 is a sectional view of a conventional thermal fuse. The conventional thermal fuse includes tubular insulation case 1 having openings at both ends, fusible alloy 2 having a substantially columnar or prismatic shape within insulation case 1, a pair of lead conductors 3, flux coated on fusible alloy 2 (not shown in the figure), and sealing member 4 for sealing the openings at the both ends of insulation case 1. Lead conductors 3 have their respective ends connected to respective ends of fusible alloy 2, and have respective other ends extending to the outside through the openings of insulation case 1. Thermal fuse fusible at a temperature ranging from 85°C to 95°C includes fusible alloy 2 made of Sn-Cd-In eutectic alloy (having a melting point of 93°C) or Sn-Bi-Pb eutectic alloy (having a melting point of 95°C). JP-A 2001 266 724 discloses a thermal fuse alloy containing 40-46 wt% Sm, 7-12 wt% B; und balance Im.

Japanese Patent Laid-Open Publication No.2000-90792 discloses a thermal fuse including a fusible alloy containing lead and cadmium.

Also, JP 2001143 692 A discloses fuse element made of an alloy composed of 25 to 40 wt.% of Bl, 10 to 20 wit% of Sn, 0.6 to 12 wt.% of Cd, and the remaining part In.

Since the conventional thermal fuse uses fusible alloy 2 containing lead and cadmium, disposal of an electronic apparatus using this thermal fuse releases lead and cadmium.

### SUMMARY OF THE INVENTION

A fusible element used in a thermal fuse includes an alloy containing 20wt.% to 39.5wt.% of tin, 11.5wt.% to 31wt.% of bismuth, and 49wt.% to 68.5wt% of Indium, the balance being unavoidable impurities of not more than 0.5 wt.% and excluding cadmium and lead.

A thermal fuse including the fusible element does not release lead or cadmium even if being disposed of.

### BRIEF DESCRIPTION OF THE DRAWINGS

Fig. 1A is a top view of a thermal fuse according to Exemplary Embodiment 1 of the present invention.
Fig. 1B is a sectional view of the thermal fuse taken along line 1B-1B shown in Fig. 1A according to Embodiment 1.
Fig. 1C is an enlarged sectional view of the thermal fuse according to Embodiment 1.
Fig. 2 shows compound of Sn-Bi-In ternary alloy for providing a fusible alloy of the thermal fuse according to Embodiment 1.
Fig. 3A is a top view of a thermal fuse according to Exemplary Embodiment 2 of the invention.
Fig. 3B is a sectional view of the thermal fuse taken along line 3B-3B shown in Fig. 3A according to Embodiment 2.
Fig. 4 is a perspective view of a battery according to Exemplary Embodiment 3 of the invention.
Fig. 5 is a sectional view of a radial type thermal fuse according to Exemplary Embodiment 4 of the invention.
Fig. 6 is a sectional view of an axial type thermal fuse according to Exemplary Embodiment 5 of this invention.
Fig. 7 is a sectional view of a conventional thermal fuse.

### DETAILED DESCRIPTION OF THE PREFERRED EMBODIMENTS

### Exemplary Embodiment 1

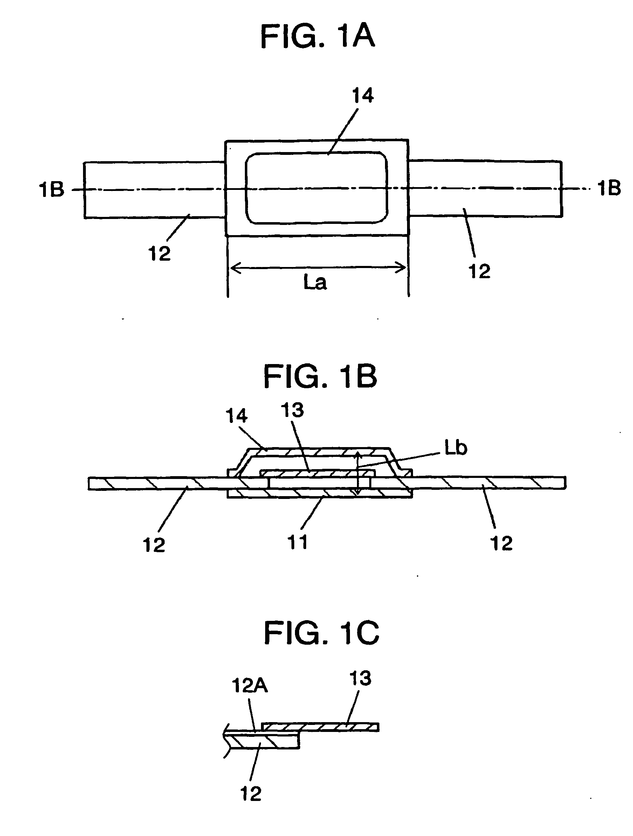

Fig. 1A is a top view of a thin thermal fuse according to Exemplary Embodiment 1 of the present invention. Fig. 1B is a sectional view of the thermal fuse taken along line 1B-1B shown in Fig. 1A. First insulation film 11 formed of a single-layered sheet is provided with a pair of metal terminals 12 having widths narrower than that of first insulation film 11. Fusible alloy 13 is connected between respective ends of metal terminals 12 and positioned over first insulation film 11, and provides a fusible element of the thermal fuse. A surface of fusible alloy 13 is coated with flux (not shown) made of resin including essentially rosin. Second insulation film 14 of a single-layered sheet is placed over fusible alloy 13, and bonded to first insulation film 11 by sealing, so that a space is provided between insulation films 11 and 14. Fusible alloy 13 is hermetically sealed by securely bonding the outer circumference of second insulation film 14 to the outer circumference of first insulation film 11 to prevent fusible alloy 13 from deterioration. Insulation films 11 and 14 thus provide an insulation housing for enclosing fusible alloy 13.

Metal terminals 12 have flat strip or filament shapes made of metal essentially including nickel, nickel-based alloy, such as copper nickel, solid nickel, or nickel alloy including other material. Metal terminals 12 containing more than 98% of nickel has a low specific resistance ranging from 6.8×10⁻⁸Ω•·m to 12×10⁻⁸Ω•·m, hence having an improved reliability including a resistance to corrosion. A thickness of the metal terminal 12 is not more than 0.15mm. If the thickness exceeds 0.15mm, the thermal fuse becomes too thick. Since metal terminals 12 are made of material having a Young's modulus ranging from 3x10¹⁰Pa to 8×10¹⁰Pa and a tensile strength ranging from 4x10⁸Pa to 6×10⁸Pa, they do not often deform accidentally during handling and transportation, hence being easily bent without breaking in a bending process. If the Young's modulus is not larger than 3x10¹⁰Pa, metal terminal 12 is easily bent, hence having wavy deformation at portions which are not to be bent (e.g., end portions of metal terminals 12 to be arranged to use for electrical connections). This prevents the terminals from being connected fusible alloy 13 by welding. If the Young's modulus is not less than 8×10¹⁰Pa, metal terminals 12 are hardly to bent and broken,. Furthermore, if the tensile strength is not more than 4x10⁸Pa, metal terminals 12 is easily bent. If the strength is not less than 6×10⁸Pa, the terminals are hardly bent and broken.

Each of metal terminals 12 may include metal layer 12A made of material, such as tin or copper on an upper surface at the distal end thereof, as shown in Fig. 1C. The layer provides a wettability to fusible alloy 13 to ensure connection between metal layer 12A and fusible alloy 13. Since tin and copper composing metal layers 12A have wettability to fusible alloy 13 better than that of nickel used for metal terminals 12, tin and copper expedite flow of melted fusible alloy 13 toward the metal layers 12A, thereby facilitating disconnection of fusible alloy 13.

Materials suitable for metal layers 12A include solid metals of copper, tin, bismuth, indium, and alloys of them. Metal layers 12A preferably have thicknesses not more than 15µm. If the thicknesses are larger than 15µm, an amount of metal composing metal layers 12A diffusing towards fusible alloy 13 increases. This increase changes a melting point of fusible alloy 13, hence causing a fusing temperature of the thermal fuse to shift. Metal layers 12A may be made of material having a composition identical to that of fusible alloy 13, and does not change the melting point of fusible alloy 13 since the amount of the diffusing metal composing the metal layers 12A is very small even if it diffuses to fusible alloy 13.

Fusible alloy 13 is composed of Sn-Bi-In alloy which contains 20 to 39.5wt.% of tin, 49 to 68.5wt.% of indium, and 11.5 to 31wt.% of bismuth. The alloy provides the thermal fuse having a fusing temperature rated not higher than 95°C and excluding lead and cadmium.

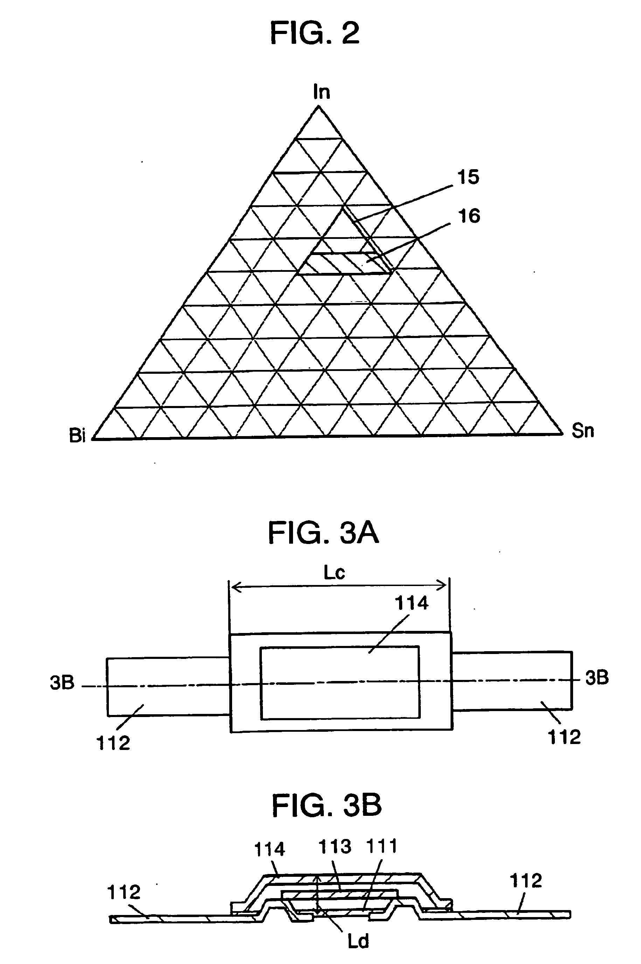

Fusible alloy 13 does not have a sufficient strength if a composition of tin is less than 20wt.% in Sn-Bi-In alloy composing fusible alloy 13 since indium is softer than tin, and since bismuth is more brittle than tin. As a result, it is difficult to handle fusible alloy 13 in manufacturing processes. In Sn-Bi-In alloy containing not less than 20wt.% of tin, if a composition of indium is less than 49wt.%, the amount of tin is excessively large. The composition of indium more than 55wt.% is excessively large. A melting point of solid tin is 232°C, which is higher than the melting point of 156°C of solid indium. The melting point of fusible alloy 13 depends greatly upon the composition of tin if the alloy contains an excessive amount of tin. Hence, a variation of the composition causes deviation of the melting point, hence causing a large change of the fusing temperature of the thermal fuse. For this reason, the composition of indium is more than 49wt.%, and preferably ranges from 49 to 55wt,% since these figures provide a desirable balance between tin and indium. In the case that Sn-Bi-In alloy containing 20wt.% of tin and 49wt.% of indium, the melting point of fusible alloy 13 exceeds 95°C if a composition of bismuth is less than 11.5wt.%. Therefore, the Sn-Bi-In alloy contains not less than 11.5 wt% of bismuth for use in the thermal fuse having the fusing temperature rated not higher than 95°C for protecting a battery. Fig. 2 shows a composition of Sn-Bi-In ternary alloy composing fusible alloy 13. Fusible alloy 13 having the above composition corresponds to an area surrounded by line 15 in Fig. 2. The composition of indium preferably ranges from 49 to 55wt.% corresponding to hatched area 16.

Fusible alloy 13 is processed to have a filament shape by a process, such as die drawing or die extrusion with a die having a circular cross-section. Alloy 13 of the filament shape is pressed to have a rectangular or oval cross section having a thickness not more than 0.1mm. This filament shape is then cut to have a predetermined length. Fusible alloy 13 is placed between the respective ends of metal terminals 12 and at the center over first insulation film 11. Metal terminals 12 and fusible alloy 13 are connected by a process, such as laser welding, hot welding, or ultrasonic welding. The laser welding is suitable since reducing an area to be heated for the connection of fusible alloy 13 to metal terminals 12 without causing damages to areas other than welding portions.

First insulation film 11 and second insulation film 14 have thicknesses not more than 0.15mm. Films having thicknesses exceeding 0.15mm are not suitable for the thin thermal fuse since increasing a thickness of the thermal fuse. First insulation film 11 and second insulation film 14 may be made of resin essentially including one of polyethylene terephthalate ("PET"), polyethylene naphthalate ("PEN"), ABS resin, SAN resin, polysulfone, polycarbonate, Noryl, vinyl chloride, polyethylene, polyester, polypropylene, polyamide, PPS resin, polyacetal, fluorine-base resin and polyester, and may be preferably includes thermoplastic resin.

According to Embodiment 1, first insulation film 11 and second insulation film 14 made of single-layered sheets are explained, and may be made of laminated sheets of plural materials different from each other. For example, first insulation film 11 and second insulation film 14 may be composed of laminated sheets of PET film and PEN film to obtain a larger strength. This can increase a mechanical strength of the thermal fuse. In addition, laminated sheets of first insulation film 11 and second insulation film 14 may be made of combination of materials having a low thermal resistance and a high thermal resistance, respectively, besides the combination described above.

According to Embodiment 1, a sufficient insulation distance may not be ensured between metal terminals 12 after the thermal fuse is fused due to a spine-like projection, such as a burr, left on metal terminals 12 at manufacturing processes. A main body of the thermal fuse consisting of first insulation film 11, second insulation film 14, and fusible alloy 13 has an overall length not more than 2.0mm, as denoted by reference symbol La in Fig. 1A and Fig. 1B, and is not useful as the thermal fuse. If the length La is not less than 5.0mm, the thermal fuse is not practical for use in a small sized battery since the fuse requires a large space for mounting. The thermal fuse preferably includes a main body having length La ranging from 2.0mm to 5.0mm.

Furthermore, if a thickness Lb in Fig. 1B measured from the bottom surface of first insulation film 11 to the upper surface of second insulation film 14 is not more than 0.3mm, the thickness is not suitable to make a thermal fuse since the thickness does not provide a space to accommodate fusible alloy 13. If thickness Lb not less than 0.7mm, the thermal fuse becomes too thick. If the thermal fuse is mounted to a small battery having a projection, such as an electrode, having a height ranging from 0.5 to 0.7mm, for example, the combination of the thermal fuse and the battery become too thick to be actually used. Therefore, the thickness Lb from the bottom surface of first insulation film 11 to the upper surface of second insulation film 14 preferably ranges from 0.3 to 0.7mm.

Fusible alloys according to Embodiment 1 having predetermined compositions were prepared, and were examined.

### (Example 1)

Alloy composed of 37wt.% of tin, 12wt.% of bismuth, and 51wt.% of indium was die-drawn to have a filament shape having a circular cross-section having a diameter of 0.5mm, is pressed to have a filament shape having a rectangular cross section having a thickness of 0.1mm and a width of 1.95mm, and then, is cut to have a length of 3mm, thus providing fusible alloy 13 PET films having a length of 5mm, a width of 3mm and a thiclness of 0.1mm were used for first insulation films 11 and second insulation films 14. Metal terminals 12 were made of nickel plates having a length of 10mm a width of 3mm, and a thickness of 0.1mm, and have respective end portions tin-plated to provide plated layers 12A having thicknesses of 10µm. Flux (not shown) essentially included rosin.

### (Example 2)

Alloy composed of 32wt.% of tin, 18wt.% of bismuth, and 50wt.% of indium was used for fusible alloys 13. First insulation films 11, metal terminals 12, second insulation films 14 and flux were the same as those of Example 1.

### (Comparative Example 1)

Alloy composed of 40wt.% of tin, 15wt.% of bismuth, and 45wt.% of indium was used for fusible alloys 13. First insulation films 11, metal terminals 12, second insulation films 14 and flux were the same as those of Example 1.

### (Comparative Example 2)

Alloy composed of 42wt.% of tin, 8wt.% of bismuth, and 50wt.% of indium was used for fusible alloys 13. First insulation films 11, metal terminals 12, second insulation films 14 and flux were the same as those of Example 1.

Twenty samples of each of thermal fuses include fusible alloys 13 of Example 1, Example 2, comparative Example 1, and Comparative Example prepared thermal fuses were placed inside an air-circulating oven, and were measured in fusing temperatures on the thermal fuses while the temperature in the oven rose at a rate of 1°C/min.

Table 1 shows a result of the measured fusing temperatures of the thermal fuses of Example 1, Example 2, Comparative Example 1, and Comparative Example 2.

**(Table 1)**

| Fusing Temperature | Example 1 | Example 2 | Comparative Example 1 | Comparative Example 2 |
|---|---|---|---|---|
| Average | 93.8°C | 86.5°C | 97.2°C | 103.1°C |
| Highest | 94.5°C | 87.8°C | 100.6°C | 105.2°C |
| Lowest | 93.2°C | 85.7°C | 93.2°C | 101.3°C |

As shown in Table 1, the thermal fuses of Examples 1 and 2 exhibit differences between their respective highest fusing temperatures and the lowest fusing temperatures not more than 3°C, hence providing thermal fuses having small variations in their fusing temperature. The thermal fuses of Comparative Example 1 includes alloy containing excessive proportion of tin, and hence, exhibits the difference exceeding 4°C between the highest fusing temperature and the lowest fusing temperature, thus exhibiting large variations of the fusing temperature. In other words, the fusible alloy used in the fuse of Comparative Example 1 is not suitable for use in the thermal fuses since exhibiting variations exceeding 4°C of the fusing temperature, which is a limit required for ordinary thermal fuses. The thermal fuses of Comparative Example 2 have fusing temperatures exceeding 95°C since they contain a small amount, 8% of bismuth.

According to Embodiment 1, fusible alloy 13 made of Sn-Bi-In alloy is explained, and may not necessarily exclude unavoidable impurities, such as zinc, silver, copper mixed in this alloy. An amount of such impurities is zinc, silver, copper mixed in this alloy. An amount of such impurities is preferably not more than 0.5wt.% since the impurities may further change the fusing temperature if included at a rate more than 0.5wt.%.

### Exemplary Embodiment 2

Fig. 3A is a top view of a thin thermal fuse according to Exemplary Embodiment 2 of the present invention. Fig. 3B is a sectional view of the thermal fuse taken along line 3B-3B shown in Fig. 3A.

The thermal fuse of Embodiment 2 shown in Fig. 3A and Fig. 3B includes the same components as those of a thermal fuse of Embodiment 1 shown in Fig. 1A and Fig. 1B. The thermal fuse according to Embodiment 2 differs from that of Embodiment 1 in that metal terminals 112 has a portion near one end thereof protrudes over the upper surface of first insulation film 111 from the bottom surface, as shown in Fig. 3B. A structure other than this is identical to that of the thermal fuse of Embodiment 1.

Accordingly, in this thin thermal fuse of Embodiment 2, fusible alloy 113 includes a fusible element of the thermal fuse connected between respective ends of metal terminals 112 and positioned above first insulation film 111. The fusible element is composed of Sn-Bi-In alloy containing more than 20wt.% tin, more than 11.5wt.% of bismuth, and more than 49wt.% of indium. Fusible alloy 113 thus contains neither lead nor cadmium that may be released to the outside.

The thermal fuse according to Embodiment 2 includes a main body consisting of first insulation film 111, second insulation film 114, and fusible alloy 113 and having an overall length Lc. If the length Lc is not more than 2.0mm, a sufficient insulation distance may not be ensured between metal terminals 112 after the thermal fuse is fused since a spine like projection, such as a burr, on metal terminals 112 in manufacturing processes, hence being not useful for the thermal fuse. If the length Lc is mot less than 5.0mm, the thermal fuse is not practical for use in a small size battery since requiring a large space for mounting it. The length Lc of the main body may range preferably from 2.0mm to 5.0mm.

If a thickness Ld measured from the bottom surface of first insulation film 111 to the upper surface of second insulation film 114 shown in Fig. 3B is not more than 0.3mm, the thickness is not suitable to make the thermal fuse since a space enough to accommodate fusible alloy 113 is not provided. The thermal fuse is too thick if thickness Ld is not less than 0.7mm. The thermal fuse may be mounted to a small battery including an electrodes having a projecting height ranging, for example, from 0.5 to 0.7mm. The thickness makes the combination of the thermal fuse and the battery too thick, hence being not practical. Therefore, the thickness Ld measured from the bottom surface of first insulation film 111 to the upper surface of second insulation film 114 may range preferably from 0.3 to 0.7mm.

### Exemplary Embodiment 3

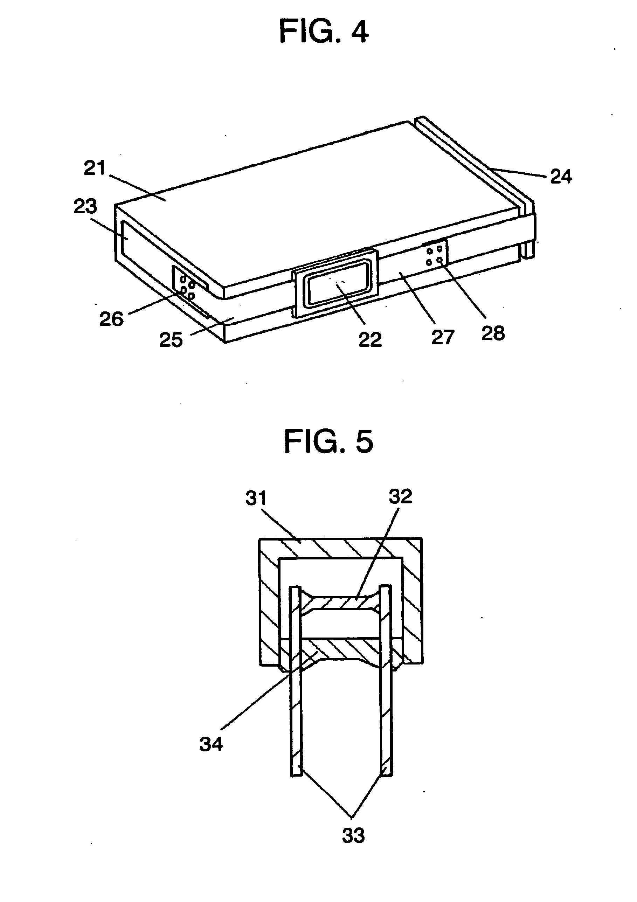

Fig. 4 is a perspective view of a battery according to Exemplary Embodiment 3 of the present invention. The battery includes battery unit 21, thermal fuse 22, external electrode 23 of battery unit 21, and protection circuit 24 connected electrically to battery unit 21. Thermal fuse 22 may be any of thin thermal fuses according to Embodiments 1 and 2 shown in Fig. 1A through Fig. 3B. Terminal 25 of thermal fuse 22 is connected electrically to external electrode 23 at connection point 26 by spot welding or the like. Another terminal 27 of thermal fuse 22 is connected electrically to protection circuit 24 at connection point 28 by spot welding or the like. Component providing protection circuit 24 are assembled in the protection circuit 24 with lead-free solder, such as Sn-Ag base solder or Sn-Cu base solder. Thermal fuse 22 stops an electric current from battery unit 21 when battery unit 21 produces heat exceeding a predetermined amount.

Thin thermal fuse 22 of the battery includes fusible alloy 13 including a fusible element. The element is connected between respective ends of metal terminals 12 and positioned above first insulation film 11, for instance, as shown in Fig. 1A. Fusible alloy 13 is composed of Sn-Bi-In alloy containing not less than 20wt.% of tin, not less than 11.5 wt.% of bismuth, and not less than 49wt.% indium. Fusible alloy 13 thus contains neither lead nor cadmium, hence preventing the battery from releasing lead or cadmium even if the battery is disposed of.

### Exemplary Embodiment 4

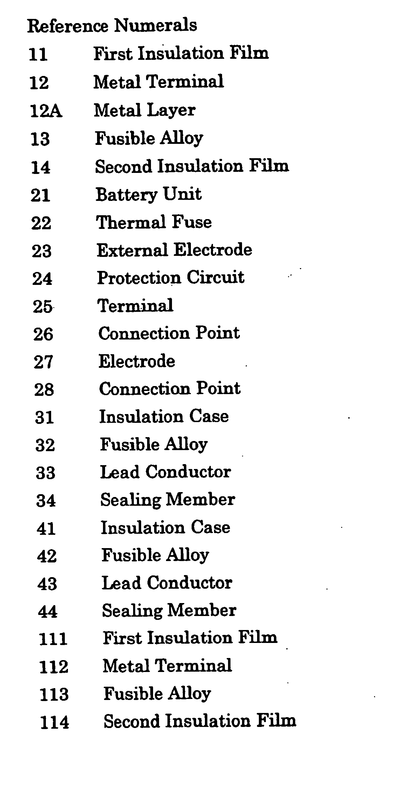

Fig. 5 is a sectional view of a radial type thermal fuse according to Exemplary Embodiment 4 of the present invention. In this thermal fuse, insulation case 31 having a cylindrical tube shape having a bottom or a prismatic tube shape having a bottom is made of any of polybutylene terephthalate (PBT), polyphenylene sulfide (PPS), polyethylene terephthalate (PET), phenolic resin, ceramic, glass, and the like materials. Fusible alloy 32 having a substantially cylindrical or prismatic shape in insulation case 31 is composed of Sn-Bi-In alloy. The alloy contains 20 to 39.5wt.% of tin, 49 to 68.5wt.% of indium, and 11.5 to 31wt.% of bismuth. The alloy allows the thermal fuse to have a rated fusing tenperature not more than 95°C and not to contain lead or cadmium.

If Sn-Bi-In alloy composing fusible alloy 32 contains less than 20wt.% of tin, Fusible alloy 32 does not have a sufficient strength since indium is softer than tin and bismuth is more brittle than tin. This composition prevents fusible alloy 32 from being to handled easily in manufacturing processes. The Sn-Bi-In alloy containing not less than 20wt% of tin is regarded as containing excessive amount of tin if containing less than 49wt.% of indium. The Sn-Bi-In alloy containing not less than 55wt.% of indium is regarded as containing an excessive amount of indium. A melting point of solid tin is 232°C, which is higher than a melting point of 156°C of solid indium. The melting point of fusible alloy 32 depends greatly upon the compounding ratio of tin if alloy 32 contains an excessive amount of tin. Hence, a variation of the compounding ratio increases a deviation of the melting point, hence changing the fusing temperature of the thermal fuse. For this reason, the alloy preferably contains at least 49wt.% of indium, preferably 49 to 55wt.% of indium, thus providing a desirable balance between tin and indium. Sn-Bi-In alloy containing 20wt.% of tin and 49wt.% of indium provides the melting point of fusible alloy 32 exceeds 95°C if containing less than 11.5wt.% of bismuth. The fusible alloy may preferably contain not less than 11.5wt.% of bismuth for use in the radial type thermal fuse having a rated fusing temperature not higher than 95°C for protection of the battery.

Lead conductors 33 have respective one ends connected to respective ones of both ends of fusible alloy 32, and have respective other ends extending to the outside through an opening of insulation case 31. Lead conductors 33 having a filament shape may be made of solid metal, such as copper, iron, nickel, alloy of them, and have surfaces plated with metal, such as tin, zinc, bismuth, indium, silver, copper, and alloy containing any of these metals. Fusible alloy 32 is coated with flux (not shown) which melts and removes an oxide film from the fusible alloy 32 when the ambient temperature rises.

The opening of insulation case 31 is sealed with sealing member 34 made of thermosetting resin, such as epoxy or silicone. Fusible alloy 32 and lead conductors 33 are connected by welding or ultrasonic welding. Alternatively, they are connected by having them melt with an electric current.

The radial type thermal fuse of Embodiment 4 includes fusible alloy 32 composed of the Sn-Bi-In alloy containing not less than 20wt.% of tin, not less than 11.5wt.% of bismuth, and not less than 49wt.% of indium, not containing lead or cadmium. Therefore, fusible alloy 32 does not release lead or cadmium. Lead conductors 33 having their respective one ends connected with fusible alloy 32 have respective other ends extending to the outside through the opening of insulation case 31. This structure provides the radial type thermal fuse having a large flexibility for an orientation in mounting it to a device, such as a battery.

### Exemplary Embodiment 5

Fig. 6 is a sectional view of an axial type thermal fuse according to Exemplary Embodiment 5 of the present invention. Tubular insulation case 41 having openings at both ends thereof is made of any of polybutylene terephthalate (PBT), polyphenylene sulfide (PPS), polyethylene terephthalate (PET), phenolic resin, ceramic, glass, and the like. Fusible alloy 42 having a substantially cylindrical or prismatic shape in insulation case 41 is composed of Sn-Bi-In alloy. The alloy contains 20 to 39.5wt.% of tin, 49 to 68.5wt.% of indium, and 11.5to 31wt.% of bismuth. The alloy provides the axial type thermal fuse having a rated fusing temperature not higher than 95°C and containing no lead and no cadmium similarly to a thermal fuse of Embodiment 1.

In Fig. 6, lead conductors 43 extends outward from the openings of insulation case 41. Respective ends of these lead conductors 43 are connected to respective ones of both ends of fusible alloy 42. The opening at each end of insulation case 41 is sealed with sealing member 44.

### INDUSTRIAL APPLICABILITY

A fusible element for a thermal fuse according to the present invention does not contain lead or cadmium, hence not releasing lead or cadmium even after the fuse is disposed of.

## Claims

1. A fusible element (13; 113; 32; 42) for use in a thermal fuse, said fusible element (13;
113; 32; 42) comprising an alloy containing
20 to 39.5wt.% of tin,
11.5 to 31wt.% of bismuth, and
49 to 68.5wt.% of indium,
the balance being unavoidable impurities of not more than 0.5wt.% and excluding cadmium and lead.

2. The fusible element (13; 113; 32; 42) according to claim 1, wherein the alloy contains 49 to 55wt.% of indium.

3. The fusible element (13; 113; 32; 42) according to claim 1 or 2, wherein the alloy contains 32 to 39.5wt.% of tin.

4. A thermal fuse comprising:
first and second metal terminals (12; 112); and
the fusible element (13; 113; 32; 42) according to any one of claims 1 to 3 connected between the first metal terminal (12; 112) and the second metal terminal (12; 112).

5. The thermal fuse according to claim 4, further comprising an insulation housing (11, 14; 111, 114) for accommodating the fusible element (13; 113; 32; 42).

6. The thermal fuse according to claim 5, wherein the insulation housing (11, 14; 111, 114) comprises:
a first insulation film(11; 111) having the first metal terminal(12; 112) and the second metal terminal(12; 112) mounted thereto; and
a second insulation film (14; 114) located over a first surface of the first insulation film (11; 111) and over the fusible element (13; 113; 32; 42) to provide a space between the first and second insulation films (11, 14; 111, 114).

7. The thermal fuse according to claim 6, wherein the first and second metal terminals (12; 112) are placed on the first surface of the first insulation film (11; 111).

8. The thermal fuse according to claim 6,
wherein respective portions of the first and second metal terminals (12; 112) are located over the first surface of the first insulation film (11; 111),
wherein respective other portions of the first and second metal terminals (12; 112) are located on a second surface of the first insulation film(11; 111), and
wherein the fusible element (13; 113; 32; 42) is connected to the respective portions of the first and second metal terminals(12; 112).

9. The thermal fuse according to claim 6, wherein the first insulation film (11; 111) and the second insulation film(14; 114) provides a main body having a length ranging from 2.0mm to 5.0mm.

10. The thermal fuse according to claim 5, wherein the insulation housing (11, 14; 111, 114) includes
an insulation case (31) having a tubular shape having an opening, the insulation case (31) having a bottom, and
a sealing member (34) for closing the opening of the insulation case (31), and
wherein the first and second metal terminals (12; 112) extend through the opening of the insulation case (31) to an outside of the insulation case (31) in a same directions.

11. The thermal fuse according to claim 5, wherein the insulation housing (11, 14; 111, 114) includes
a tubular insulation case (41) having openings at both ends thereof, and
sealing members (44) for closing the openings at the both ends of the insulation case (41), and
wherein the first and second metal terminals (12; 112) extend through the openings at the both ends of the insulation case (41) to an outside of the tubular insulation case (41), respectively.

12. A battery comprising:
a battery unit (21); and
a thermal fuse (22) including
a first metal terminal(12; 112) connected with the battery unit (21),
a second metal terminal (12; 112), and
the fusible element (13; 113; 32; 42) according to any one of claims 1 to 3 connected between the first metal terminal (12; 112) and the second metal terminal (12; 112), the fusibleelement (13; 113; 32; 42) being fusible by heat from the battery unit (21), wherein the thermal fuse (22) stops an electric current from the battery unit (21) when the fusible element (13; 113; 32; 42) fuses by the heat from the battery unit (21).

## Patentansprüche

1. Schmelzelement (13; 113; 32; 42) zum Einsatz in einer Thermosicherung, wobei das Schmelzelement (13; 113; 32; 42) eine Legierung umfasst, die
20 bis 39,5 Gew.-% Zinn,
11,5 bis 31 Gew.-% Wismut, und
49 bis 68,5 Gew.-% Indium
enthält, und der Rest unvermeidliche Verunreinigungen von nicht mehr als 0,5 Gew.-% mit Ausnahme von Cadmium und Blei sind.

2. Schmelzelement (13; 113; 32; 42) nach Anspruch 1, wobei die Legierung 49 bis 55 Gew.-% Indium enthält.

3. Schmelzelement (13; 113; 32; 42) nach Anspruch 1 oder 2, wobei die Legierung 32 bis 39,5 Gew.-% Zinn enthält.

4. Thermosicherung, die umfasst:
einen ersten und einen zweiten Metallanschluss (12; 112); und
das Schmelzelement (13; 113; 32; 42) nach einem der Ansprüche 1 bis 3, das zwischen den ersten Metallanschluss (12; 112) und den zweiten Metallanschluss (12; 112) geschaltet ist.

5. Thermosicherung nach Anspruch 4, die des Weiteren ein Isoliergehäuse (11, 14; 111, 114) zum Aufnehmen des Schmelzelementes (13; 113; 32; 42) umfasst.

6. Thermosicherung nach Anspruch 5, wobei das Isoliergehäuse (11, 14; 111, 114) umfasst:
einen ersten Isolierfilm (11; 111), an dem der erste Metallanschluss (12; 112) und der zweite Metallanschluss (12; 112) angebracht sind; und
einen zweiten Isolierfilm (14; 114), der sich über einer ersten Fläche des ersten Isolierfilms (11; 111) und über dem Schmelzelement (13; 113; 32; 42) befindet, um einen Raum zwischen dem ersten und dem zweiten Isolierfilm (11, 14; 111, 114) zu schaffen.

7. Thermosicherung nach Anspruch 6, wobei der erste und der zweite Metallanschluss (12; 112) an der ersten Fläche des ersten Isolierfilms (11; 111) positioniert sind.

8. Thermosicherung nach Anspruch 6,
wobei sich jeweilige Abschnitte des ersten und des zweiten Metallanschlusses (12; 112) über der ersten Fläche des ersten Isolierfilms (11; 111) befinden,
sich jeweilige andere Abschnitte des ersten und des zweiten Metallanschlusses (12; 112) an einer zweiten Fläche des ersten Isolierfilms (11; 111) befinden, und
das Schmelzelement (13; 113; 32; 42) mit den jeweiligen Abschnitten des ersten und des zweiten Metallanschlusses (12; 112) verbunden ist.

9. Thermosicherung nach Anspruch 6, wobei der erste Isolierfilm (11; 111) und der zweite Isolierfilm (14; 114) einen Hauptkörper mit einer Länge bilden, die von 2,0 mm bis 5,0 mm reicht.

10. Thermosicherung nach Anspruch 5, wobei das Isoliergehäuse (11, 14; 111, 114) enthält:
eine Isolierhülse (31), die eine Röhrenform mit einer Öffnung hat, wobei die Isolierhülse (31) einen Boden hat, sowie
ein Dichtungselement (34) zum Schließen der Öffnung der Isolierhülse (31), und
wobei sich der erste und der zweite Metallanschluss (12; 112) durch die Öffnung der Isolierhülse (31) in gleichen Richtungen zu einer Außenseite der Isolierhülse (31) erstrecken.

11. Thermosicherung nach Anspruch 5, wobei das Isoliergehäuse (11, 14; 111, 114) enthält:
eine röhrenförmige Isolierhülse (41) mit Öffnungen an ihren beiden Enden, sowie Dichtungselemente (44) zum Schließen der Öffnungen an den beiden Enden der Isolierhülse (41), und
wobei sich der erste und der zweite Metallanschluss (12; 112) durch die Öffnungen an den beiden Enden der Isolierhülse (41) zu einer Außenseite der röhrenförmigen Isolierhülse (41) erstrecken.

12. Batterie, die umfasst:
eine Batterieeinheit (21); und
eine Thermosicherung (22), die enthält:
einen ersten Metallanschluss (12; 112), der mit der Batterieeinheit (21) verbunden ist,
einen zweiten Metallanschluss (12; 112), und
das Schmelzelement (13; 113; 32; 42) nach einem der Ansprüche 1 bis 3, das zwischen den ersten Metallanschluss (12; 112) und den zweiten Metallanschluss (12; 112) geschaltet ist, wobei das Schmelzelement (13; 113; 32; 42) durch Wärme von der Batterieeinheit (21) zum Schmelzen gebracht werden kann und die Thermosicherung (22) einen Strom von der Batterieeinheit (21) unterbricht, wenn das Schmelzelement (13; 113; 32; 42) durch die Wärme von der Batterieeinheit (21) schmilzt.

## Revendications

1. Élément fusible (13, 113, 32, 42) à utiliser dans un fusible thermique, ledit élément fusible (13, 113, 32, 42) étant constitué en un alliage contenant :
- 20 à 39,5 % en masse d'étain,
- 11,5 à 31 % en masse de bismuth, et
- 49 à 68,5 % en masse d'indium,
- le restant étant des impuretés inévitables ne représentant pas plus de 0,5 % en masse et excluant le cadmium et le plomb.

2. Élément fusible (13, 113, 32, 42) selon la revendication 1, dans lequel l'alliage contient 49 à 55 % en masse d'indium.

3. Élément fusible (13, 113, 32, 42) selon les revendications 1 ou 2, dans lequel l'alliage contient 32 à 39,5 % en masse d'étain.

4. Fusible thermique comprenant :
- des première et seconde bornes en métal (12, 112) ; et
- un élément fusible (13, 113, 32, 42), selon l'une quelconque des revendications 1 à 3, connecté entre la première borne en métal (12, 112) et la seconde borne en métal (12, 112).

5. Fusible thermique selon la revendication 4, comprenant en outre un logement d'isolation (11, 14, 111, 114) pour recevoir l'élément fusible (13, 113, 32, 42).

6. Fusible thermique selon la revendication 5, dans lequel le logement d'isolation (11, 14, 111, 114) est constitué par :
- un premier film d'isolation (11, 111) comportant la première borne en métal (12, 112) et la seconde borne en métal (12, 112) montées sur celui-ci ; et
- un second film d'isolation (14, 114) situé par-dessus une première surface du premier film d'isolation (11, 111) et par-dessus l'élément fusible (13, 113, 32, 42) pour ménager un espace entre les premier et second films d'isolation (11, 14, 111, 114).

7. Fusible thermique selon la revendication 6, dans lequel les première et seconde bornes en métal (12, 112) sont placées sur la première surface du premier film d'isolation (11, 111).

8. Fusible thermique selon la revendication 6 :
- dans lequel des parties respectives des première et seconde bornes en métal (12, 112) sont situées par-dessus la première surface du premier film d'isolation (11, 111),
- dans lequel d'autres parties respectives des première et seconde bornes en métal (12, 112) sont situées sur une seconde surface du premier film d'isolation (11, 111), et
- dans lequel l'élément fusible (13, 113, 32, 42) est connecté aux parties respectives des première et seconde bornes en métal (12, 112).

9. Fusible thermique selon la revendication 6, dans lequel le premier film d'isolation (11, 111) et le second film d'isolation (14, 114) constituent un corps principal ayant une longueur dans une plage de 2,0 mm à 5,0 mm.

10. Fusible thermique selon la revendication 5, dans lequel le logement d'isolation (11, 14, 111, 114) comprend :
- un boitier d'isolation (31) ayant une forme tubulaire comportant une ouverture, le boitier d'isolation (31) ayant un fond, et
- un élément d'étanchéité (34) pour fermer l'ouverture du boitier d'isolation (31), et
- dans lequel les première et seconde bornes en métal (12, 112) s'étendent à travers l'ouverture du boitier d'isolation (31) vers l'extérieur du boitier d'isolation (31) dans une même direction.

11. Fusible thermique selon la revendication 5, dans lequel le logement d'isolation (11, 14, 111, 114) comprend :
- un boitier d'isolation tubulaire (41) ayant des ouvertures à ses deux extrémités, et
- des éléments d'étanchéité (44) pour fermer les ouvertures aux deux extrémités du boitier d'isolation (41), et
- dans lequel les première et seconde bornes en métal (12, 112) s'étendent à travers les ouvertures aux deux extrémités du boitier d'isolation (41) vers l'extérieur du boitier d'isolation tubulaire (41), respectivement.

12. Batterie comprenant :
- une unité de batterie (21) ; et
- un fusible thermique (22) comprenant :
- une première borne en métal (12, 112) connectée à l'unité de batterie (21),
- une seconde borne en métal (12, 112), et
- un élément fusible (13, 113, 32, 42), selon l'une quelconque des revendications 1 à 3, connecté entre la première borne en métal (12, 112) et la seconde borne en métal (12, 112), l'élément fusible (13, 113, 32, 42) étant fusible par la chaleur de l'unité de batterie (21), dans laquelle le fusible thermique (22) coupe un courant électrique de l'unité de batterie (21) lorsque l'élément fusible (13, 113, 32, 42) fond par suite de la chaleur de l'unité de batterie (21).
